# EUROPEAN PATENT SPECIFICATION

(11) **EP 1 999 189 B1**
(45) Date of publication and mention of the grant of the patent: **11.11.2009**
(21) Application number: 06727492.8
(22) Date of filing: 20.03.2006
(51) Int. Cl.: C08G 85/00, C08L 67/04

(54) **METHOD OF CONTROLLING THERMAL DEGRADATION OF ANIONICALLY TERMINATED POLYMERS AND MATERIALS OBTAINED**
VERFAHREN ZUR REGULIERUNG DES THERMISCHEN ABBAUS VON ANIONISCH TERMINIERTEN POLYMEREN UND ERHALTENE MATERIALIEN
MÉTHODE DE CONTRÔLE DE LA DÉGRADATION THERMIQUE DE POLYMÈRES À TERMINAISONS ANIONIQUES ET MATÉRIAUX OBTENUS

(43) Date of publication of application: 10.12.2008
(73) Proprietor: Alma Mater Studiorum -Universita' di Bologna, 40126 Bologna (IT); Institute of Polymers and Carbons Materials, 41800 Zabrze, Silesia (PL)
(72) Inventor: SCANDOLA, Mariastella, I-40100 Bologna (IT); FOCARETE, Maria, Letizia, I-40100 Bologna (IT); FOLTRAN, Ismaela, I-31015 Conegliano (IT); KAWALEC, Michal, PL-43-400 Cuestyn (PL); KURCOK, Piotr, PL-44-117 Gliwice (PL); ADAMUS, Grazyna, PL-44-117 (PL); KOWALCZUK, Marek, PL-40-800 Zabrze (PL)
(74) Representative: Bottero, Carlo
(86) International application number: PCT/IB2006/000898
(87) International publication number: WO 2007/107808

(56) References cited:
- WO-A-96/08535
- US-A- 3 824 197
- US-A- 3 824 198
- US-A1- 2002 143 116
- ABATE R ET AL: "Thermal-degradation of microbial poly(4-hydroxybutyrate)" MACROMOLECULES, ACS, WASHINGTON, DC, US, vol. 27, no. 2, 1994, pages 332-336, XP002906005 ISSN: 0024-9297
- IANNACE S ET AL: "POLY(3-HYDROXYBUTYRATE)-CO-(3-HYDROXYVALE RATE)/POLY-L-LACTIDE BLENDS: THERMAL AND MECHANICAL PROPERTIES" JOURNAL OF APPLIED POLYMER SCIENCE, JOHN WILEY AND SONS INC. NEW YORK, US, vol. 54, no. 10, 5 December 1994 (1994-12-05), pages 1525-1535, XP000514124 ISSN: 0021-8995

## Description

### BACKGROUND OF INVENTION

### Field of the Invention

The present invention relates to polymers having improved thermal stability, and to a method for preparing said polymers that enables control of their thermal degradation and stability via chemical structure of the polymer end groups. Said polymers are selected from the group comprising homopolymers having repeating units as described with formula (I): -O-C(R¹R²)-C(HR³)-C(O)-, where R¹,R²,R³ are hydrogen atom, alkyl, alkenyl, aryl, alkoxyl, carboxyl substituents or copolymers that contain at least 5% of repeating units described with the above formula (I); preferably from 30% up to 99%. The sequence distribution of the copolymer comprises random, gradient, multiblock and block structures.

Said copolymers being of various topology and microstructure containing also repeating units from the group of polyesters, polycarbonates, polyamides, nucleic acids, polyacrylates, polyolefins, polyaromatics, polysiloxanes.

Said polymers are selected from homopolymers or copolymers that contain anionically activated moieties. Said anionically activated moieties can be present in the terminal positions in the polymer in the form of carboxylate, alkoxide or carbanionic group and/or as functional groups along the polymer chain such as a carboxylate group in salt form (-COO⁽⁻⁾)(M⁽⁺⁾) where M⁺ will be Li⁺, Na⁺, K⁺, Cs⁺ and their complexes with respective crown ethers as well as cryptands and ⁺NR¹R²R³R⁴ where Rⁱ - H, or alkyl.

Further, the present invention relates to the use of said polymers selected from homopolymers or copolymers as described above in the first and second embodiment for the preparation of polymeric materials for medical, environmental, agricultural and advanced materials applications.

### Description of Prior Art

In the field of the anionic polymerization it is known that for the anionic polymerization for example of β-butyrolactone activation of the polymer carboxylate propagating species is required (Jedlinski Z., Kurcok P., Kowalczuk M. Macromolecules, 1985, 18, 2679). This may be achieved either by complexation of an alkali metal cation (K⁺, Na⁺) with suitable complexant (crown ether or cryptand) or by using a "bulky" counter ion, like for example tetra-butyl ammonium. Another solution is to use an appropriate solvent activating initiator. The polymers obtained have an anionically terminated polymeric moiety In order to obtain from an anionic polymerization process polymers with improved thermal properties suitable additives for polymer processing have to be used.

The use of additives in a process for preparing polymers involves some drawbacks.

First of all the polymers or product formulations obtained will result more expensive.

Secondly, from the industrial point of view when additives are used in mixture with polymers the processing conditions will result to be more difficult to control.

Therefore, research efforts have been directed towards a method for preparing polymers having improved thermal stability with respect to polymers known in the art without the need to add stabilizing substances during the preparation process.

The influence of the chemical structure of the polymer end groups plays a fundamental role on the thermal degradation of a specific class of polymers such as polyesters and copolymer thereof for example poly(3-hydroxybutyrate) - PHB.

It is well known from the former literature, that natural PHB (derived by biotechnological approach) degrades by random scission of polymer chains with the formation of crotonate end groups and crotonic acid release (Grassie N, Murray EJ, Holmes PA. Polym Degrad Stab 1984, 6, 127-34; Grassie N, Murray EJ, Holmes PA. Polym Degrad Stab 1984, 6, 95-103).

It is also known that in the case of synthetic poly(3-hydroxybutyrate), derived by ring-opening polymerization of β-butyrolactone, crotonic acid is also released during the thermal decomposition (Kurcok P., Kowalczuk M., Adamus G., Jedlinski Z. J.M.S.-Pure Appl. Chem., 1995, A32, 875-880).

Attempts have been made to prepare polymeric compositions (blends) containing polyesters and copolymers, especially obtained by the way of anionic polymerization or copolymerization of for example racemic β-butyrolactone.

For example, PL320208 relates to a method of production of a biodegradable and biodisintegrable polymeric composition, containing synthetic poly(3-hydroxybutyrate) or its copolymers, characterized with content of 10-95% of synthetic poly(3-hydroxybutyrate) and/or its copolymers.

However said polymeric compositions show unsatisfactory thermal stability in high temperature processing conditions.

### SUMMARY OF THE INVENTION

Applicants felt the need to improve thermal stability and/or control thermal degradation of said polymers selected from the group comprising homopolymers having:
(i) repeating units as described with formula (I): -O-C(R¹R²)-C(HR³)-C(O)-, where R¹, R², R³ are hydrogen atom, alkyl, alkenyl, aryl, alkoxyl, carboxyl substituents; and
(ii) anionically activated moieties that may be present in the terminal positions in the polymer chain in the form of carboxylate, alkoxide or carbanionic group and/or as functional groups along the polymer chain such as a carboxylate group in salt form (-COO⁽⁻⁾) (M⁽⁺⁾) where M⁺ will be Li⁺, Na⁺, K⁺, Cs⁺ and their complexes with respective crown ethers as well as cryptands and ⁺NR¹R²R³R⁴ where Rⁱ - H, or alkyl.

Applicants perceived that the conversion of anionically terminated polymers to the polymers containing the desired inactive end groups protects said polymers from thermal degradation.

Applicants perceived that it is possible to improve, at the molecular level, thermal stability of polymers having anionically terminated polymeric moieties due to the control of the chemical structure of the polymer end groups.

According to a first object, the present invention relates to polymers having improved thermal stability as claimed in the independent claim.

According to a second object, the present invention relates to a method for preparing said polymers that enables control of their thermal degradation and stability via chemical structure of the polymer anionically activated moieties as claimed in the independent claim.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

### DETAILED DESCRIPTION OF INVENTION AND PREFERRED EMBODIMENTS

Applicants have found a method for preparing polymers having improved thermal stability said method enabling to control the thermal degradation and stability via chemical structure of the anionically activated moieties.

Advantageously polymers according to the present invention are useful for the preparation of polymeric materials for medical, enviromental, agricultural and advanced materials applications.

According to the present invention the method for preparing polymers with improved thermal stability comprises at least one reaction step in which polymers selected from homopolymers or copolymers that contain anionically activated moieties are reacted with a protonating agent or with a compound of formula (II) R-X.

Further, the present invention relates to the method of the improvement of thermal stability of anionically terminated polymers by conversion of their end groups to inactivated ones, preferably carboxylic, hydroxyl and/or their anionically inactive derivatives, by protonation, alkylation, esteryfication or etheryfication, acylation and amidation.

The anionically activated moieties can be present in the terminal positions in the polymer in the form of carboxylate, alkoxide or carbanionic group and/or as functional groups along the polymer chain such as a carboxylate group in salt form (-COO⁽⁻⁾) (M⁽⁺⁾) where M⁺ will be Li⁺, Na⁺, K⁺, Cs⁺ and their complexes with respective crown ethers as well as cryptands and ⁺NR¹R²R³R⁴ where Rⁱ - H, or alkyl.

The compound of general formula (II) is: R-X. In R-X: X represents a leaving group, and R is selected from the groups with general formula selected from the group comprising: CₙH₂ₙ₊₁, PhCₙH₂ₙ, CₙH₂ₙ₊₁C(O) or PhCₙH₂ₙC(O) where n is preferably in the range 1 to 10; preferably 1 to 5 .

Preferably, R is selected from methyl or benzyl.

Advantageously, X is an halogen.

The protonating agent is selected from the group comprising acid substances.

Advantageously, said acid substances are selected from the group comprising mineral acids such as hydrochloric acid or sulfuric acid, organic acids e.g. acetic acid, as well as ion-exchange resins in acid form: sulfonated polystyrene/divinylbenzene (DVB) matrix, for example Dowex 50Wx2.

The present invention is also related with controlled thermal degradation of polymers which are selected from homopolymers or copolymers that contain anionically activated moieties by adjusting the appropriate concentration of anionically activated moieties, type of counterion, temperature and time of degradation.

The anionically activated moieties can be present in the terminal positions in the polymer in the form of carboxylate, alkoxide or carbanionic group and/or as functional groups along the polymer chain such as a carboxylate group in salt form (-COO⁽⁻⁾)(M⁽⁺⁾) where M⁺ will be Li⁺, Na⁺, K⁺, Cs⁺ and their complexes with respective crown ethers as well as cryptands and ⁺NR¹R²R³R⁴ where Rⁱ - H, or alkyl.

Schematically, the anionically activated moieties can be represented by the following formula as an example -COO⁽⁻⁾ M⁽⁺⁾, where -COO⁽⁻⁾ is the activated carboxylate polymer end group, and M⁽⁺⁾ comes from the activator used in the anionic polymerization. The activator can be for example an alkali metal cation (Li⁺, Na⁺, K⁺, Cs⁺) preferably with suitable complexant (crown ether or cryptand) or a "bulk" counter ion, like for example tetra-butyl ammonium.

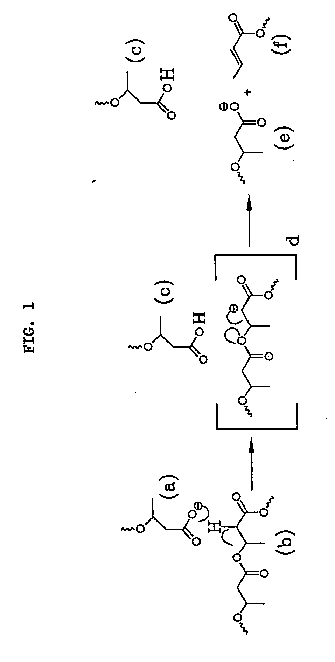

Figure 1 illustrates the degradation mechanism by which the carboxylate end group attacks the hydrogen at C2 carbon of the polymer (homopolymer or copolymer of formula (I)), exemplified in Figure 1 by poly(2-unsubstituted-3-hydroxyalkanoate).

Thermal degradation may take place through ElcB elimination reaction involving an anionically activated moiety and (i) another macromolecule of poly(2-unsubstituted-3-hydroxyalkanoate) susceptible of abstraction of hydrogen atom at C2 leading to reaction (intermolecularly) or (ii) the polymer chain itself (intramolecularly) according to the so-called back-biting and/or unzipping reactions, leading to formation of unsaturated end groups: HRC=CH-COO ---(polymer chain).

Both inter- and intra-molecular reactions lead to molar mass decrease.

The end group -COO⁽⁻⁾)M⁽⁺⁾ is reacted with a suitable protonating agent to obtain a deactivated carboxylic end group -COOH or is reacted with a suitable compound of general formula R-X (defined above) to obtain a deactivated ester group -COOR.

Contrary to activated carboxylate group -COO⁽⁻⁾M⁽⁺⁾, both deactivated end groups -COOH and -COOR are unable to induce the intra- and intermolecular attack on the hydrogen at C2 carbon thus the thermal properties of the polymer and/or copolymer are improved.

The present invention is based on experimental evidence that activated carboxylate polymer end groups play an important role on polymer thermal stability and may be the driving force of a new polymer degradation mechanism, as described above.

The invention will be further illustrated hereinafter with reference to the following experimental results.
a) Influence of the presence of an activated polymer end-group on thermal decomposition temperature of synthetic atactic poly(3-hydroxybutyrate), a-PHB.
   The polymer containing activated end groups shows thermal degradation by thermogravimetric analysis (TGA) at 228 °C, whereas the same a-PHB where the end groups have been deactivated (protonated) shows thermal degradation at 292°C. Thus, the polymer with activated end-group degrades about 65°C lower than the deactivated one.
   Moreover, the thermal decomposition temperature may be controlled between the above mentioned extremes depending on the ratio of activated to deactivated end groups.
b) Influence of activated polymer end-groups on molecular weight of synthetic a-PHB at moderate-to-elevated temperatures.

Two different a-PHB samples, one with activated carboxylate end groups, the other with deactivated (protonated) end groups, were subjected to thermal treatment at 80°C for 12 h. Gel permeation chromatography (GPC) measurements showed that the molar mass of the polymer sample containing activated end-groups markedly decreases during heat treatment at 80°C (i.e. at a moderate temperature where no weight loss is observed by TGA) whereas no significant molecular weight changes are shown by the deactivated sample.

The observed behavior is due to the newly proposed abstraction of hydrogen atom at C2 thermal degradation mechanism of polyesters containing activated carboxylate end groups, which is the core of the present invention and comes into play in the blends containing e.g nonactivated natural poly-3-hydroxyalkanoate (n-PHA). The results clearly demonstrate that the presence of the activated end-groups in synthetic a-PHB promotes the intermolecular thermal decomposition of the natural polymeric counterpart, leading to a single degradation event at a much lower temperature than in the pure natural counterpart polymer (n-PHB).

The above conclusion is substantiated by evidence of the absence of thermal stability changes when in the blend with natural n-PHB a protonated (deactivated) a-PHB is used instead of the active a-PHB used in the former blend. Deactivation of end groups in a-PHB prevents the occurrence of intermolecular abstraction of proton at C2 from the natural n-PHB that TGA curve is coincident with that of the plain natural polymer (degradation temperature 292°C).

Natural n-PHB (see scheme 1) contains an easily abstractable labile proton at C2, and is susceptible to subsequent E1cB elimination reaction which leads to C3-O chain scission favored by the presence of the aliphatic beta substituent.

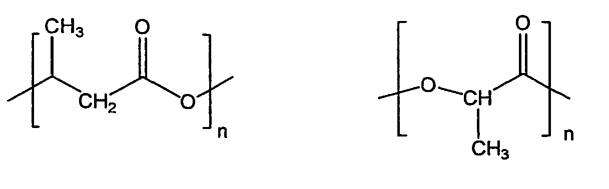

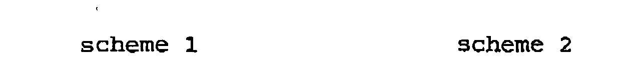

If the proton at C2 carbon is much less easily abstractable and such E1cB elimination reaction is not possible, like in polylactic acid (PLL, scheme 2), the illustrated intermolecular degradation mechanism is unlikely to occur and indeed does not occur, as found when a blend of activated a-PHB with PLL is subjected to thermal degradation. In this case two separate degradation events are observed at the same temperatures as in the pure components (i.e. 228°C for a-PHB and 363°C for PLL).

The invention will improve the polymer materials processing, by deactivation of the active carboxylate end group, and will reduce the costs of the respective product formulations.

This invention is of particular importance for application of anionically terminated polymers in medicine.

The invention will be further illustrated hereinafter with reference to the following examples. Example 1 (Method 1): Protonation of activated carboxylate centers of a-PHB with elimination of tetrabutylammonium (TBA) counter-ion, using ion-exchange resin.

Atactic poly(3-hydroxybutyrate), was obtained from the reaction of 0.38352g (1.272mmol) TBA acetate initiator with 50g (613.3mmol) of β-butyrolactone in bulk. When polymerization was completed (no residual monomer by FT-IR spectrometry was found) the polymer molecular mass was Mₙ= 33 200 (by GPC) and thermal degradation temperature Tₘₐₓ=253°C as measured by TGA. The sample of 3.586g of the polymer was dissolved in 15ml chloroform, stirred intensively with 0.083g of ion exchange resin in acid form (Dowex 50Wx2, from Fluka) for 10 minutes; the resin was filtered off and polymer was precipitated in hexane. Its thermal decomposition temperature was Tₘₐₓ= 265°C. Then the recovered polymer (3.340g) was again dissolved in 20ml of chloroform and stirred intensively with 0.1g of Dowex 50Wx2 for 3 hours. After Dowex filtration and polymer precipitation in hexane the degradation temperature was Tₘₐₓ= 281°C. Finally, when a sample of 0.28g of the polymer thus obtained was dissolved in 15 ml of CHCl₃; stirred with 0.09g of Dowex 50Wx2 for 2 hours and precipitated in hexane its thermal decomposition temperature was Tₘₐₓ= 291°C as measured by TGA. The further protonation procedure reflected no influence on the Tₘₐₓ. Example 2 (Method 2): Protonation of activated carboxylate centers of a-PHB with elimination of tetrabutylammonium (TBA) counter-ion, using acidic solution. Atactic poly(3-hydroxybutyrate) was obtained by the solution polymerization of 2.957g (34.34mmol) of β-butyrolactone in 8ml of dry THF, using TBA acetate (0.09075g; 0.300mmol) as initiator. When polymerization was completed (no residual monomer by FT-IR spectrometry was found) the crude polymer was precipitated in hexane (yield 100%) and its molecular weight determined by GPC method was Mₙ= 9700 while its degradation temperature was Tₘₐₓ=225°C (as measured by TGA). Then, 2.5g of polymer was dissolved in 15ml of chloroform and 0.05ml of concentrated HCl_{(aq)} in 10ml of distilled water was added. The two-phase system was vigorously stirred for 10 minutes and after phase separation the chloroform phase was washed five times with 10 ml of distilled water for 10 minutes each. After phase separation the polymer was precipitated in hexane from the chloroform solution. The polymer degradation temperature was Tₘₐₓ=275°C. After repetition of this purification procedure for 3 times, the polymer molar mass was Mₙ=10 000 and degradation temperature was Tₘₐₓ=292°C. The further protonation procedure reflected no influence on the Tₘₐₓ. Example 3 (Method 3): Protonation of carboxylate activated centers of a-PHB with removal of alkali metal 18-Crown-6 counter-ion complex, using acidic solution. Atactic poly(3-hydroxybutyrate) was prepared with the aid of equimolar complex of potassium acetate with 18-Crown-6 ether as initiator. β-Butyrolactone in the amount of 4.910g (57.0mmol) was added into a reactor containing 0.19796g (0.546mmol) of initiator complex in 3ml of dry THF under dry nitrogen atmosphere. When polymerization was completed (as determined by FT-IR spectrometry) the polymer was precipitated in hexane (yield 99.0%). Its molecular weight determined by GPC was Mₙ= 9400 and thermal degradation temperature was Tₘₐₓ=228°C (as measured by TGA). Then, 2.947g of recovered polymer were dissolved in 15ml of chloroform and 0.05 ml of concentrated HCl_{(aq)} in 10ml of distilled water were added. The two phase system was vigorously stirred for 10 minutes and after phase separation the chloroform fraction was washed five times with 10 ml of distilled water. The polymer was precipitated in hexane from the chloroform phase. The thermal degradation temperature was Tₘₐₓ= 269°C. After repetition of this purification procedure for 3 times, the polymer molar mass was Mₙ= 8400 and degradation temperature was Tₘₐₓ=285°C. Example 4 (Method 4): Benzylation of carboxylate activated centers of a-PHB with removal of alkali metal 18-Crown-6 counter-ion complex, using benzylbromide. Atactic poly(3-hydroxybutyrate) was prepared with the aid of equimolar complex of potassium acetate with 18-Crown-6 ether as initiator. β-Butyrolactone in the amount of 6.58g (76.5 mmol) was added into a reactor containing 0.09212g (0.94mmol) of initiator complex and 0.248g of 18-Crown-6 in 10ml of dry THF under dry nitrogen atmosphere. When polymerization was completed (as determined by FT-IR spectrometry) the polymer was precipitated in hexane (yield 99.0%). Its molecular weight determined by GPC was Mₙ= 7000 and thermal degradation temperature was Tₘₐₓ=227°C (as measured by TGA). Then, 6.5g of recovered polymer were dissolved in 30ml of THF and 0.241g (1.41 mmol) of benzylbromide was added. After 10h of stirring the polymer was precipitated in 150ml of cold hexane. Then after separation of the liquid phase, the precipitate was redissolved in 30ml chloroform. The polymer solution was washed 10 times with 30ml distilled water 10 min. each. Then the polymer was precipitated and dried under the vacuum to the constant weight. The Tₘₐₓ of such prepared sample was 284°C. Example 5 (Method 5): Methylation of carboxylate activated centers of a-PHB with removal of alkali metal 15-Crown-5 counter-ion complex, using methyliodide. Atactic poly(3-hydroxybutyrate) was prepared with the aid of equimolar complex of potassium acetate with 18-Crown-6 ether as initiator. β-Butyrolactone in the amount of 5.0g (58.13mmol) was added into a reactor containing 0.0672g (0.8199mmol) of initiator (sodium acetate) and 0.1804g of 15-Crown-5 in 10ml of dry THF under dry nitrogen atmosphere. When polymerization was completed (as determined by FT-IR spectrometry) the polymer was precipitated in hexane (yield 99.8%). Its molecular weight determined by GPC was Mₙ= 6100 and thermal degradation temperature was Tₘₐₓ=230°C (as measured by TGA). Then, 5.9g of recovered polymer were dissolved in 30ml of THF and 0.5822g (4.1mmol) of methyliodide was added. After 16h of stirring the polymer was precipitated in 150 cm³ of cold hexane. Then after liquid phase separation, the precipitate was redissolved in 30 cm³ chloroform. The polymer solution was washed 10 times with 30 cm³ distilled water 10 min. each. Then the polymer was precipitated and dried under the vacuum to the constant weight. The Tₘₐₓ of such prepared sample was 279°C.

## Claims

1. A method for improving thermal stability of polymers containing anionically activated moieties, the method comprising:
- supplying polymers selected from homopolymers or copolymers having at least 5% of repeating units of formula (I) : -O-C(R¹R²)-C(HR³)-C(O)-, where R¹, R², R³ are hydrogen atom, alkyl, alkenyl, aryl, alkoxyl, carboxyl substituents, and containing anionically activated moieties, and
- reacting said polymers with a protonating agent or with a compound of formula (II) R-X wherein X is a leaving group and R is selected from the group comprising: CₙH₂ₙ₊₁, PhCₙH₂ₙ, CₙH₂ₙ₊₁C (O), or PhCₙH₂ₙC (O) wherein n is comprised from 1 to 10.

2. The method according to claim 1, wherein said copolymers contain from 30 to 99% of repeating units described with the above formula (I)

3. The method according to claim 1 or 2, wherein the sequence distribution of the repeating units of formula (I) is random, gradient, multiblock or block structures.

4. The method according to claim 1, wherein said copolymers further contain repeating units selected from the group of: polyesters, polycarbonates, polyamides, nucleic acids, polyacrylates, polyolefins, polyaromatics, polysiloxanes.

5. The method according to claim 1, wherein said anionically activated moieties are present in the terminal positions in the polymer and/or as functional groups along the polymer chain, in the form of carboxylate, alkoxide or carbanionic group.

6. The method according to claim 5, wherein said anionically activated moieties are selected from carboxylate groups in salt form (-COO⁽⁻⁾)(M⁽⁺⁾) where M⁺ will be Li⁺, Na⁺, K⁺, Cs⁺ and their complexes with respective crown ethers as well as cryptands and ⁺NR¹R²R³R⁴ where Rⁱ - H, or alkyl.

7. The method according to claim 1, wherein said protonating agent is selected from acid substances.

8. The method according to claim 7, wherein said acid substances are selected from the group comprising mineral acids, organic acids and ion-exchange resins in acid form.

9. The method according to claim 8, wherein said mineral acids are selected from hydrochloric acid, sulfuric acid.

10. The method according to claim 8, wherein said organic acid is acetic acid.

11. The method according to claim 8, wherein said ion-exchange resins in acid form are selected from sulfonated polystyrene/divinylbenzene (DVB) matrix.

12. The method according to claim 1, wherein n is comprised from 1 to 5.

13. The method according to claim 1, wherein R is selected from methyl and benzyl.

14. The method according to claim 1, wherein X is a halogen atom.

15. Polymers obtainable by the method according to anyone of claims from 1 to 14.

16. Use of polymers according to claim 15 for the preparation of polymeric materials for medical, environmental, agricultural and advanced materials applications.

## Patentansprüche

1. Verfahren zur Verbesserung der thermischen Stabilität von Polymeren, die anionisch aktivierte Anteile enthalten, wobei der Verfahren umfasst:
- Lieferung von aus Homopolymeren oder Copolymeren ausgewählten Polymeren mit mindestens 5 % Wiederholungseinheiten der Formel (I) : -O-C(R¹R²)-C(HR³)-C(O)-, wobei R¹, R² und R³ Wasserstoffatom-, Alkyl-, Alkenyl-, Aryl-, Alkoxyl- und Carboxyl-Substituente sind und anionisch aktivierte Anteile enthalten, sowie
- Reagieren dieser Polymere mit einem Protonierungsmittel oder einer Verbindung der Formel (II) R-X, wobei X eine Abgangsgruppe ist und R aus der Gruppe ausgewählt wird, umfassend: CₙH₂ₙ+1, PhCₙH₂ₙ, CₙH₂ₙ₊₁C(O) oder PhCₙH₂ₙC(0), wobei n zwischen 1 und 10 liegt.

2. Verfahren nach Anspruch 1, wobei diese Copolymere 30 bis 99 % Wiederholungseinheiten enthalten, die mit der oben genannten Formel (I) beschrieben sind.

3. Verfahren nach Anspruch 1 oder 2, wobei die Sequenzverteilung der Wiederholungseinheiten der Formel (I) eine Zufalls-, Gradienten-, Multiblock- oder Blockstruktur ist.

4. Verfahren nach Anspruch 1, wobei diese Copolymere außerdem Wiederholungseinheiten enthalten, ausgewählt aus der Gruppe aus: Polyestern, Polycarbonaten, Polyamiden, Nukleinsäuren, Polyacrylaten, Polyolefinen, Polyaromaten, Polysiloxanen.

5. Verfahren nach Anspruch 1, wobei diese anionisch aktivierte Anteile endständig im Polymer und/oder als funktionelle Gruppe an der Polymerkette in Form einer Carboxylat-, Alkoxid- oder carbanionischen Gruppe enthalten sind.

6. Verfahren nach Anspruch 5, wobei diese anionisch aktivierte Anteile aus Carboxylatgruppen in Salzform (-COO⁽⁻⁾)(M⁽⁺⁾) ausgewählt sind, wobei M⁺ Li⁺, Na⁺, K⁺, Cs⁺ und ihre Komplexe mit den jeweiligen Kronenethern sowie Cryptanden und ⁺NR¹R²R³R⁴ sein werden, wobei gilt R¹ - H, oder Alkyl.

7. Verfahren nach Anspruch 1, wobei dieses Protonierungsmittel aus Säurestoffen ausgewählt wird.

8. Verfahren nach Anspruch 7, wobei diese Säurestoffe aus der Gruppe ausgewählt werden, die Mineralsäuren, organische Säuren und Ionenaustauscherharze in Säureform umfasst.

9. Verfahren nach Anspruch 8, wobei diese Mineralsäuren aus Salzsäure, Schwefelsäure ausgewählt werden.

10. Verfahren nach Anspruch 8, wobei diese organische Säure Essigsäure ist.

11. Verfahren nach Anspruch 8, wobei diese Ionenaustauscherharze in Säureform aus einer sulfonierten Polystyrol-/Divinylbenzolmatrix (DVB) ausgewählt werden.

12. Verfahren nach Anspruch 1, wobei n zwischen 1 und 5 liegt.

13. Verfahren nach Anspruch 1, wobei R aus Methyl und Benzyl ausgewählt wird.

14. Verfahren nach Anspruch 1, wobei X ein Halogenatom ist.

15. Polymere, die anhand des Verfahrens nach irgendeinem der Ansprüche von 1 bis 14 erhalten werden können.

16. Verwendung von Polymeren nach Anspruch 15 für die Zubereitung von Polymermaterialien für medizinische, umweltbezogene, landwirtschaftliche Anwendungen und für Hightech-Materialien.

## Revendications

1. Méthode pour améliorer la stabilité thermique des polymères contenant des portions anioniquement activées, comprenant :
- fourniture de polymères sélectionnés parmi des homopolymères ou des copolymères présentant au moins 5% des unités structurales de la formule (I) : -O-C(R¹R²)
- C (HR³) -C(O)-, où R¹, R², R³ sont un atome d'hydrogène, des substituants alkyles, alkényles, aryles, alkoxyles, carboxyles et contenant des portions anioniquement activées, et
- réaction desdits polymères avec un agent de protonation ou avec un composé de formule (II) R-X, où X est un groupe partant et R est sélectionné dans le groupe comprenant : CₙH₂ₙ₊₁, PhCₙH₂ₙ, CₙH₂ₙ₊₁C(O) ou PhCₙH₂ₙC(O), où n est compris entre 1 et 10.

2. Méthode selon la revendication 1, dans laquelle lesdits copolymères contiennent de 30 à 99% des unités structurales mentionnées dans la formule ci-dessus (I).

3. Méthode selon les revendications 1 ou 2, dans laquelle la distribution séquence des unités structurales de la formule (I) est une structure aléatoire, un gradient, un multi-bloc ou un bloc.

4. Méthode selon la revendication 1, dans laquelle lesdits copolymères contiennent également des unités structurales sélectionnées dans le groupe : des polyesters, des polycarbonates, des polyamides, des acides nucléiques, des polyacrylates, des polyoléfines, des polyaromatiques et des polysiloxanes.

5. Méthode selon la revendication 1, dans laquelle lesdites portions anioniques actives sont présentes dans les terminaisons du polymère et/ou en tant que groupes fonctionnels sur la chaîne macromoléculaire, sous forme de groupe carboxylate, alkoxyde ou carbanionique.

6. Méthode selon la revendication 5, dans laquelle lesdites portions anioniques actives sont sélectionnées parmi des groupes carboxylates sous forme de sel (-COO⁽⁻⁾ (M⁽⁺⁾), où M⁺ sera Li⁺, Na⁺, K⁺, Cs⁺ et leurs complexes avec éthers-couronnes et cryptands respectifs, ainsi que ⁺NR¹R²R³R⁴, où R¹ - H, ou alkyle.

7. Méthode selon la revendication 1, dans laquelle ledit agent de protonation est sélectionné parmi des substances acides.

8. Méthode selon la revendication 7, dans laquelle lesdites substances acides sont sélectionnées dans le groupe comprenant des acides minéraux, des acides organiques et des résines échangeuses d'ions sous forme acide.

9. Méthode selon la revendication 8, dans laquelle lesdits acides minéraux sont sélectionnés parmi l'acide chlorhydrique et l'acide sulfurique.

10. Méthode selon la revendication 8, dans laquelle ledit acide organique est un acide acétique.

11. Méthode selon la revendication 8, dans laquelle lesdites résines échangeuses d'ions sous forme acide sont sélectionnées dans une matrice de polystyrène sulfoné/de divinylbenzène (DVB).

12. Méthode selon la revendication 1, dans laquelle n est compris entre 1 et 5.

13. Méthode selon la revendication 1, où R est sélectionné parmi méthyle et benzyle.

14. Méthode selon la revendication 1, où X est un atome d'halogène.

15. Polymères pouvant être obtenus via la méthode selon l'une quelconque des revendications 1 à 14.

16. Utilisation des polymères selon la revendication 15 afin de préparer des matériaux polymères pour des applications dans le domaine médicale, environnementale, agricole et des matériaux high-tech.
